# EUROPÄISCHE PATENTSCHRIFT

(11) **EP 2 930 086 B1**
(45) Veröffentlichungstag und Bekanntmachung des Hinweises auf die Patenterteilung: **14.03.2018**
(21) Anmeldenummer: 15151268.8
(22) Anmeldetag: 15.01.2015
(51) Int. Cl.: B62D 11/24, B62D 11/04

(54) **SELBSTFAHRENDE ERNTEMASCHINE**
Self-propelled harvester
Moissonneuse automotrice

(30) Priorität: 11.04.2014 DE 102014105163
(43) Veröffentlichungstag der Anmeldung: 14.10.2015
(73) Patentinhaber: CLAAS Selbstfahrende Erntemaschinen GmbH, 33428 Harsewinkel (DE)
(72) Erfinder: Behra, Jan-Philipp, 33332 Gütersloh (DE); Loeneke, Markus, 33142 Büren (DE); Bleischwitz, Stephan, 33178 Borchen (DE)

(56) Entgegenhaltungen:
- DE-A1- 19 517 571
- DE-A1-102011 114 536

## Beschreibung

Die Erfindung betrifft eine selbstfahrende Erntemaschine mit einem frontseitigen Erntevorsatz, welche Erntemaschine zwei in deren Längsrichtung gegenüber dem Erntevorsatz versetzt angeordnete Antriebswellen eines Fahrantriebes aufweist, wobei die Antriebswellen trieblich mit sich beidseitig der Erntemaschine erstreckenden, in deren Längsrichtung verlaufenden Raupenlaufwerken verbunden sind und wobei in einem Heckbereich der Erntemaschine eine Hinterachse mit über eine Lenkeinrichtung lenkbaren Hinterrädern vorgesehen ist.

Arbeitsmaschinen für Erdbewegungen weisen zumeist einen als Gleiskette ausgebildeten Fahrantrieb auf. Die beiden als Raupenantriebe ausgeführten Laufwerke erstrecken sich dabei beidseitig der Längsmittelebene, im Wesentlichen über die gesamte Länge des Fahrgestells der entsprechenden Arbeitsmaschine. Das Zugmittel ist in diesem Fall als Stahlkette ausgebildet, wobei auf der Stahlkette mittels Scharnieren Laufflächenglieder angeordnet sind, die je nach Verwendung der Arbeitsmaschine aus Kunststoff oder Gummi hergestellt sein können. Die Stahlkette ist auf Kettenritzeln angeordnet und im Bereich ihrer Aufstandsfläche über Stützrollen abgestützt. Dabei können Kettenanordnungen vorgesehen sein, bei denen zwei Kettenritzel als Umlenkräder ausgebildet sind und ein weiteres Kettenritzel als Antriebsrad dient. Bei anderen Kettenanordnungen sind insgesamt nur zwei Kettenritzel vorgesehen, also jeweils ein Kettenritzel dient als Antriebsrad beziehungsweise als Umlenkrad.

Außerdem sind auch Ausbildungen von Laufwerken bekannt, bei denen an Stelle der mit Laufflächengliedern versehenen Ketten aus einem Gummi-Metallverbundwerkstoff bestehende Gurtbandlaufwerke verwendet werden. Auch in diesem Fall sind zwischen den beiden an einem Tragrahmen geführten Umlenkrädern die zuvor erwähnten Tragrollen angeordnet, die unter anderem für eine gleichmäßigere Lastverteilung und eine bessere Anpassung an unterschiedliche Bodenkonturen sorgen sollen.

An Erntemaschinen kamen entsprechende Laufwerke in der Vergangenheit insbesondere dann zur Anwendung, wenn als selbstfahrender Mähdrescher ausgebildete Erntemaschinen für eine Reisernte verwendet wurden. Durch die Ausbildung des Fahrantriebes als Raupenantrieb werden die Geländegängigkeit und das Traktionsverhalten der mit ihnen ausgerüsteten Erntemaschine verbessert, wobei aufgrund der größeren Aufstandsfläche auch der Bodendruck signifikant verringert werden kann. Daher finden diese Laufwerke auch vermehrt Anwendung an selbstfahrenden Erntemaschinen, die insbesondere als Mähdrescher oder Feldhäcksler ausgebildet sind und in ihrem Frontbereich einen heb- und senkbaren Erntevorsatz aufnehmen. Ohne entsprechende Raupenantriebe sind abzuerntende Felder nach längeren Regenperioden zumeist nicht mehr befahrbar beziehungsweise sinkt die Erntemaschine so stark in den Boden ein, dass in den daraus resultierenden Spuren die Bodenbeschaffenheit deutlich verschlechtert wird. Daher kommen diese Laufwerke auch an Mähdreschern zum Einsatz, mit denen Getreide oder Raps geerntet wird, oder sie werden an selbstfahrenden Feldhäckslern bei der Ernte von Mais oder Grassilage eingesetzt, damit trotz des feuchten und eventuell tiefgründigen Bodens die Ernte möglichst bodenschonend durchgeführt werden kann.

An ihrem dem Erntevorsatz zugewandten Ende sind diese Erntemaschinen mit einer angetriebenen nicht lenkbaren Achse versehen, während eine zumeist nicht angetriebene Achse an deren heckseitigem Ende über Achsschenkel lenkbare Räder aufnimmt. Dabei ist eine Halbkettenanordnungen vorgesehen, das heißt, es ist eine der Antriebsachsen an Stelle der Antriebsräder mit den Raupenlaufwerken versehen, wobei diese in der Regel jeweils ein profiliertes endloses Gurtband aufweisen.

Selbstfahrende Erntemaschinen werden auf unterschiedlichen Untergründen betrieben, das heißt, sie fahren während eines Erntevorgangs auf dem Feld; sie legen aber auch für die Anfahrt zum Feld relativ lange Strecken auf asphaltierten oder befestigten Straßen zurück. Ein entsprechendes Raupenlaufwerk, das vorzugsweise mit einem Gurtband versehen ist, weist einen wesentlichen Nachteil auf, der darin besteht, dass beim Manövrieren extreme Scherkräfte zwischen der äußeren Profilierung des Zugmittels und dem Untergrund auftreten. Beim Fahren auf einer asphaltierten Straße tritt daher beim Durchfahren enger Kurven oder beim Wenden ein erhöhter Verschleiß am Gurtband auf. Auf dem Feld führen die Scherkräfte dagegen zu einem Aufreißen des Bodens, das ebenfalls unerwünscht ist, da dadurch die Bodenstruktur verändert und geschädigt wird. Daher sind Laufwerke zum Teil mit Einrichtungen zum Variieren von deren Aufstandsfläche und somit zur Verbesserung der Manövrierfähigkeit der Erntemaschine versehen, so dass sich auf dem Feld die Scherkräfte verringern lassen und bei Wendemanövern der Wendekreis verkürzbar ist.

Eine mit Endloslaufwerken versehene selbstfahrende Erntemaschine der im Oberbegriff des Patentanspruchs 1 angegebenen Gattung ist aus der DE 41 93 720 T1 bekannt. Es handelt sich dabei um einen Halbkettenantrieb eines selbstfahrenden Mähdreschers, bei dem die Hinterachse der Erntemaschine lenkbare, nicht angetriebene Räder aufweist. Die Laufwerksanordnungen mit Antriebsrädern, die über zwei Antriebswellen von einem Getriebe aus angetrieben werden, sowie mit Umlenkrollen und Führungsrollen sind in einem ersten fest mit einem Hauptrahmen des Mähdreschers verbundenen Hilfsrahmen angeordnet. Ein zweiter Hilfsrahmen, der schwenkbar an dem ersten Hilfsrahmen geführt ist, nimmt die Hinterachse auf. In Abhängigkeit von einem Lenkwinkel der Räder der Hinterachse wird ein sogenannter Gewichtsverteilungszylinder betätigt, derart dass bei einem Lenkeinschlag die Hinterachse über den zweiten Hilfsrahmen in Richtung Boden verlagert wird. Dadurch wird ein hinterer Abschnitt der Laufwerksanordnung jeweils vom Boden abgehoben.

Weiterhin ist aus der DE 10 2011 114 536 A1 ein mit Raupenlaufwerken versehener Mähdrescher bekannt, der bei einigen der Ausgestaltungsbeispiele ebenfalls eine Hinterachse mit nicht angetriebenen lenkbaren Rädern aufweist. Die Raupenlaufwerke weisen dabei jeweils ein Gurtband, eine Antriebsrolle, zwei Umlenkrollen sowie Stützrollen auf. Bei Straßenfahrt und bei einem Richtungswechsel, also bei Lenkung der Räder der Hinterachse des Mähdreschers soll eine Aufstandsfläche jedes der Gurtbänder reduziert werden. Zu diesem Zweck werden die Stützrollen derart in Richtung Boden verstellt, dass die Umlenkrollen vom Boden abheben und folglich das Gurtband nur im Bereich der Stützrollen und einem zwischen diesen liegenden Abschnitt Bodenkontakt hat.

Schließlich ist aus der DE 40 16 496 A1 ein hydrostatischer Fahrantrieb eines Gleiskettenfahrzeugs bekannt, bei dem dem Antrieb jeder der Laufketten ein in seinem Schluckvolumen verstellbarer Hydromotor zugeordnet ist. Die Hydromotoren werden dabei über Druckmittelleitungen mit unterschiedlichen Mengen eines Druckmittels aus einer oder mehreren Hydropumpen beaufschlagt. In der Druckschrift wird davon ausgegangen, dass bei Raupenantrieben von Baumaschinen der Fahrantrieb derart gesteuert ist, dass bei gleicher Übersetzung der beiden hydrostatischen Getriebe das Fahrzeug geradeaus und bei Zuteilung unterschiedlicher Ölmengen an die Hydromotoren in einem Kurvenverlauf fährt. Letzteres soll durch eine entsprechende Verstellung der Fördermengen der beiden Hydropumpen geschehen.

Die Druckschrift DE 195 17 571 A1 als nächstliegender Stand der Technik gegenüber dem Gegenstand des unabhängigen Anspruchs offenbart eine selbstfahrende landwirtschaftliche Maschine mit einem mindestens zwei angetriebene vordere Laufräder sowie ein hinteres Lauf- und Lenkrad aufweisenden Fahrwerk. Die vorderen Laufräder weisen einen Antrieb auf, bei dem das Laufrad / die Laufräder der einen Seite gegenüber dem Laufrad / den Laufrädern der anderen Seite für Lenkzwecke über eine Lenkeinrichtung steuerbar mit unterschiedlicher Drehzahl bzw. gegenläufig antreibbar ist / sind. Zudem ist das hintere Lauf- und Lenkrad mit einer Gebereinrichtung gekoppelt, die bei Lenkeinschlägen des hinteren Lauf- und Lenkrades automatisch dem jeweiligen Lenkwinkel entsprechende Steuerimpulse an die Lenkeinrichtung der vorderen Laufräder abgibt. Es ist Aufgabe der vorliegenden Erfindung, die Lenkbarkeit einer mit einem Erntevorsatz betriebenen Erntemaschine der vorgenannten Gattung zu verbessern, ohne dass während einer Kurvenfahrt beziehungsweise dem Wenden der Erntemaschine die Aufstandsflächen der beiden dem Fahrantrieb zugeordneten Gurtbänder verändert wird.

Diese Aufgabe wird, ausgehend vom Oberbegriff des Patentanspruchs 1, in Verbindung mit dessen kennzeichnenden Merkmalen gelöst.

Gemäß dem kennzeichnenden Teil des Patentanspruchs 1 soll jede Antriebswelle über jeweils einen separaten Hydromotor eines hydrostatischen Getriebes angetrieben werden, wobei ein Schluckvolumen eines jeden der beiden Hydromotoren derart in Abhängigkeit von einer von der Lenkeinrichtung auf die lenkbaren Hinterräder übertragenen Lenkbewegung veränderbar ist, dass bei gleichzeitiger Lenkung der Hinterräder ein Moment um eine Hochachse der Erntemaschine erzielbar ist. Zum Lenken einer Erntemaschine ist ein Moment um deren Hochachse notwendig, welches bei den bekannten Halbraupenanordnungen bislang ausschließlich durch die Schwenkbewegung des Hecks der Erntemaschine erzeugt wird, die aus dem Lenkvorgang der entsprechend eingeschlagenen Räder der Hinterachse resultiert. Dabei tritt aufgrund der langen Aufstandsflächen der Raupen zwischen diesen und dem Boden ein dem um die Hochachse erzeugten Moment entgegenwirkendes Moment auf, das auch als Wendewiderstandsmoment bezeichnet wird.

Dabei werden vom Getriebe der Erntemaschine unterschiedliche Antriebsmomente auf die beiden rechts und links der Erntemaschine angeordneten Raupenlaufwerke übertragen, so dass ein zusätzliches Moment um die Hochachse zur Unterstützung der Kurvenfahrt erzeugt wird. Zu diesem Zweck ist jeder der Antriebswellen ein Hydromotor eines hydrostatischen Getriebes zugeordnet, dessen Schluckvolumen in Abhängigkeit von der von der Lenkeinrichtung auf die lenkbaren Hinterräder übertragenden Lenkbewegung verändert wird. Dadurch wird eine wesentliche Verbesserung der Wendeeigenschaften der Erntemaschine erreicht, so dass auch die auf den Boden wirkenden Scherkräfte deutlich reduziert werden können. Von Vorteil ist außerdem, dass während dieses Wendevorgangs die Aufstandsflächen der Raupenlaufwerke unverändert bleiben, so dass auch im Vorgewende des abzuerntenden Feldes das günstige Traktionsverhalten und der geringe Bodendruck beibehalten werden können. Anderenfalls würden unter Umständen erhebliche Bodenschäden im Bereich des Vorgewendes hervorgerufen werden.

Nach der DE 41 93 720 T1 soll zwar auch an einem mit einem Halbraupenantrieb versehenen selbstfahrenden Mähdreschers dessen Lenkbarkeit verbessert werden; zu diesem Zweck wird aber der Mähdrescher in seinem Heckbereich dadurch angehoben, dass die lenkbaren Räder während eines Lenkvorgangs einen höheren Anteil der Last übernehmen, und dafür das Raupenlaufwerk im Bereich der Tragrollen und des Umlenkrades vom Boden abgehoben wird. Das hat allerdings zur Folge, dass die lenkbaren Hinterräder und das Antriebsrad aufgrund der zusätzlichen Lastübernahme während eines Lenkvorgangs extrem in den Boden einsinken.

Auch bei der nach der DE 10 2011 114 536 A1 vorgesehenen Anordnung zur Verbesserung der Lenkbarkeit des mit Halbraupenantrieben versehenen selbstfahrenden Mähdreschers wird an den Raupenlaufbändern die Aufstandsfläche verringert, so dass sich an der restlichen Aufstandsfläche der Bodendruck erhöht.

Das nach der DE 40 16 496 A1 vorgesehene Antriebssystem ist für ein Gleiskettenfahrzeug mit einem Vollkettenantrieb vorgesehen, das heißt, dass das Fahrzeug neben der Gleiskette über keine lenkbaren Räder einer entsprechenden Lenkachse verfügt. Durch eine Hubvolumen-Stelleinrichtung der einzelnen Hydromotoren zugeordneten Anordnung von Ventilen soll dabei erreicht werden, dass die beiden Hydromotoren stets auf die gleiche Steuerkennlinie eingestellt sind, unabhängig davon, welche der Ketten einen größeren Fahrwiderstand hat. Dadurch soll ein verbesserter Geradeauslauf des Gleiskettenfahrzeuges erreicht werden.

In weiterer Ausgestaltung der Erfindung soll jeder der Antriebswellen ein hydrostatisches Getriebe zugeordnet sein, dessen Arbeitskreis mit einer in ihrem Fördervolumen veränderlichen Hydropumpe in Verbindung steht. Hierzu können die Arbeitskreise durch eine gemeinsame Hydropumpe gespeist werden. Alternativ kann jeder Arbeitskreis eine separate Hydropumpe aufweisen. Durch die separaten, jedem der Raupenlaufwerke zugeordneten hydrostatischen Getriebe mit entsprechend verstellbaren Hydropumpen und verstellbaren Hydromotoren lassen sich in vorteilhafter Weise die Drehzahlen und übertragenen Antriebsmomente der beiden Raupenlaufwerke unabhängig voneinander regeln. Diese an den Hydropumpen und Hydromotoren durch entsprechende Steuereinrichtungen einstellbaren Werte des Fördervolumens und/oder Schluckvolumens werden dabei durch die jeweilige Lenkbewegung, die auf die nicht angetriebenen und lenkbaren Räder der Hinterachse übertragen werden, vorgegeben.

Zudem soll der Antrieb der beiden Raupenlaufwerke erfindungsgemäß derart ausgebildet sein, dass jeder der Hydromotoren die diesem trieblich zugeordnete Antriebswelle über ein in zumindest zwei Übersetzungsstufen schaltbares mechanisches Getriebe antreibt. Dabei kann das entsprechende mechanische Getriebe in Vorgelegebauweise ausgebildet sein. Im Rahmen einer entsprechenden Kombination von hydrostatischem Getriebe und mechanischem Getriebe ist vorgesehen, dass zumindest die mechanischen Getriebe und gegebenenfalls auch die jeweiligen Hydromotoren in einem gemeinsamen als Achs- und Getriebegehäuse dienenden Bauteil vereinigt sind. Durch die Anforderung an eine Spreizung zwischen maximaler Zugkraft und entsprechenden Endgeschwindigkeiten sind die vorgenannten zumindest zwei schaltbaren Übersetzungsstufen des mechanischen Getriebes erforderlich. Durch den Einsatz dieser Schaltstufen kann die notwendige hydraulische Spreizung reduziert werden, so dass aufgrund eines effizienteren hydraulischen Fahrantriebs dessen Wirkungsgrad verbessert wird. Im Hinblick auf die im Feldbetrieb erforderlichen hohen Gesamtübersetzungen können Hydraulikeinheiten mit geringeren Größen eingesetzt werden, so dass daraus Gewichts- und Kostenvorteile resultieren.

Weiterhin ist in diesem Zusammenhang vorgesehen, dass das mechanische Getriebe aus einer vom Hydromotor angetriebenen Hauptwelle mit drehfest auf dieser angeordneten Antriebsrädern unterschiedlicher Zähnezahl besteht, die mit Vorgelegerädern im Eingriff stehen. Die Vorgelegeräder sind wiederum frei drehbar auf einer Vorgelegewelle angeordnet und wahlweise mit dieser über eine Schaltkupplung kuppelbar. Ein drehfest auf der Vorgelegewelle angeordnetes Zahnrad greift in ein Abtriebsrad ein, wobei dieses Abtriebsrad unmittelbar auf der Antriebswelle des Raupenlaufwerks angeordnet sein kann. Die beiden entsprechend ausgebildeten Abtriebswellen können dabei Bremsscheiben einer Bremseinrichtung aufnehmen und sind vorzugsweise über Kardanwellen mit dem jeweiligen links und rechts der Erntemaschine angeordnetem Raupenantrieb verbunden. Entsprechende Schaltkupplungen, die zur wahlweisen Verbindung eines der Vorgelegeräder mit der Vorgelegewelle dienen, können entweder als einfache Klauenkupplungen oder als mit einer Schaltsynchronisierung versehene Klauenkupplungen ausgebildet sein.

In weiterer Ausgestaltung der Erfindung ist vorgesehen, dass ein Treibrad des Raupenlaufwerks von der Antriebswelle aus über einen als Untersetzungsgetriebe ausgebildeten Endantrieb angetrieben wird. Ein entsprechendes Untersetzungsgetriebe kann als Stirnradtrieb mit einem Zwischenrad ausgebildet sein. Darüber hinaus besteht auch die Möglichkeit, das Untersetzungsgetriebe als Planetengetriebe mit einer Standübersetzung auszubilden.

Schließlich ist vorgesehen, dass die Hinterachse ein hydraulisches Lenksystem aufweist, dass der Lenkeinrichtung ein Messwertaufnehmer zur Erfassung eines eingestellten Lenkwinkels der Hinterräder zugeordnet ist und dass die entsprechenden Lenkwinkel als Istwerte einer Regeleinrichtung zugeführt werden, die Sollgrößen an Steuereinheiten der Hydromotoren liefert. An der Lenkeinrichtung kann ein entsprechender Geberzylinder vorgesehen sein, der Sollwerte für die Betätigung eines an der Hinterachse vorgesehenen als Nehmerzylinder ausgebildeten Lenkzylinders liefert. Die vom Fahrer in der Kabine der Erntemaschine am Lenkrad durchgeführten Lenkbewegungen sollen durch die vorgenannten Messwertaufnehmer erfasst und an die Regeleinrichtung übermittelt werden. Die Regeleinrichtung sorgt je nach eingestelltem Lenkwinkel für eine entsprechende Verstellung der Steuereinheiten der Hydromotoren.

Des Weiteren kann die Regeleinrichtung die Sollgrößen an Schaltbetätigungen von Schaltkupplungen liefern. Somit kann die Regeleinrichtung für eine Schaltbetätigung der Schaltkupplungen sorgen.

Dabei kann mit jeder der Schaltkupplungen zumindest zwei Übersetzungsstufen zwischen dem jeweiligen Hydromotor und der entsprechenden Antriebswelle schaltbar sein.

Die Erfindung ist nicht auf die angegebene Kombination der Merkmale des unabhängigen Patentanspruchs 1 mit den von diesem abhängigen Patentansprüchen beschränkt. Es ergeben sich darüber hinaus weitere Möglichkeiten, einzelne Merkmale, insbesondere dann, wenn sie sich aus den Patentansprüchen, den Vorteilsangaben zu den Patentansprüchen, der nachfolgenden Beschreibung der Ausführungsbeispiele oder unmittelbar aus der Zeichnung ergeben, miteinander zu kombinieren. Außerdem soll die Bezugnahme der Patentansprüche auf die Zeichnung durch die Verwendung von Bezugszeichen den Schutzumfang der Patentansprüche auf keinen Fall auf die dargestellten Ausgestaltungsbeispiele beschränken.

Weitere Merkmale der Erfindung ergeben sich im Übrigen aus der nachfolgenden Beschreibung und der dazugehörigen Zeichnung, in der ein Ausführungsbeispiel der Erfindung vereinfacht dargestellt ist.

Es zeigen:
- Figur 1: als schematische Darstellung eine Seitenansicht einer als Mähdrescher ausgebildeten selbstfahrenden Erntemaschine mit einer entsprechenden Ansicht auf eines von zwei an dem Mähdrescher vorgesehenen Raupenlaufwerken;
- Figur 2: eine schematische Darstellung einer ersten Ausführungsform eines Lenkund Antriebssystems der in der Figur 1 gezeigten selbstfahrenden Erntemaschine in einer Draufsicht;
- Figur 3: eine schematische Darstellung einer zweiten Ausführungsform eines Lenk- und Antriebssystems der in der Figur 1 gezeigten selbstfahrenden Erntemaschine in einer Draufsicht; und
- Figur 4: eine im Maßstab vergrößerte Ansicht auf ein in der Figur 2 dargestelltes mechanisches Getriebe.

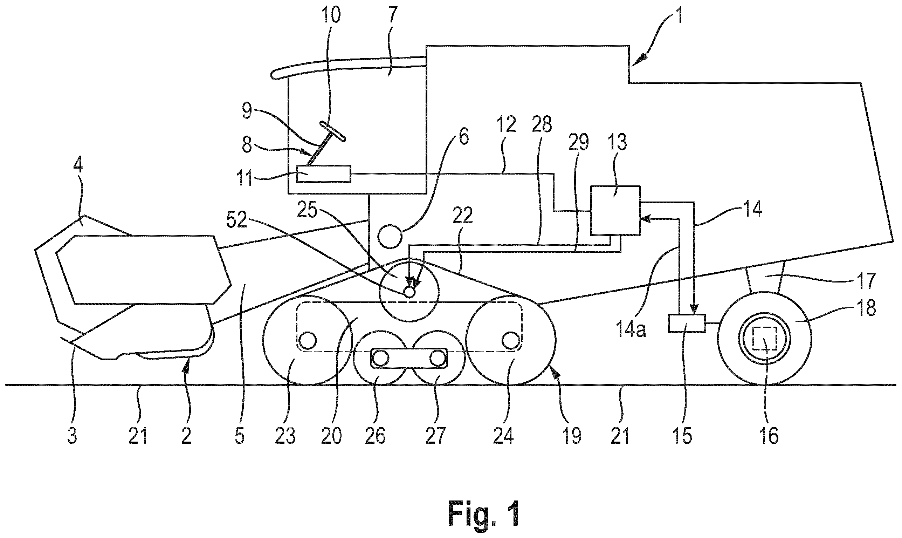

In der Figur 1 ist mit 1 eine als selbstfahrender Mähdrescher ausgebildete Erntemaschine bezeichnet, die frontseitig einen als Getreide- und Rapsschneidwerk ausgebildeten Erntevorsatz 2 aufweist. Dieser Erntevorsatz 2 ist in seiner Arbeitsrichtung mit einem Mähbalken 3 sowie mit einer gegenüber dem Erntevorsatz 2 heb- und senkbaren Haspel 4 versehen. An den Erntevorsatz 2 schließt sich ein Schrägförderer 5 an, der heb- und senkbar über eine Schwenkachse 6 am Mähdrescher 1 geführt ist. Anstelle der Verwendung eines Getreide- und Rapsschneidwerks kann natürlich jede andere Art eines Erntevorsatzes, beispielsweise zum Ernten von Mais, Grassamen, Leinsamen, Hülsenfrüchten usw. vorgesehen sein. Darüber hinaus kann die selbstfahrende Erntemaschine 1 auch als selbstfahrender Feldhäcksler mit austauschbaren Erntevorsätzen, wie zum Beispiel einem Mähwerk, einer Pick-up, eines Maiserntevorsatzes usw. gestaltet sein.

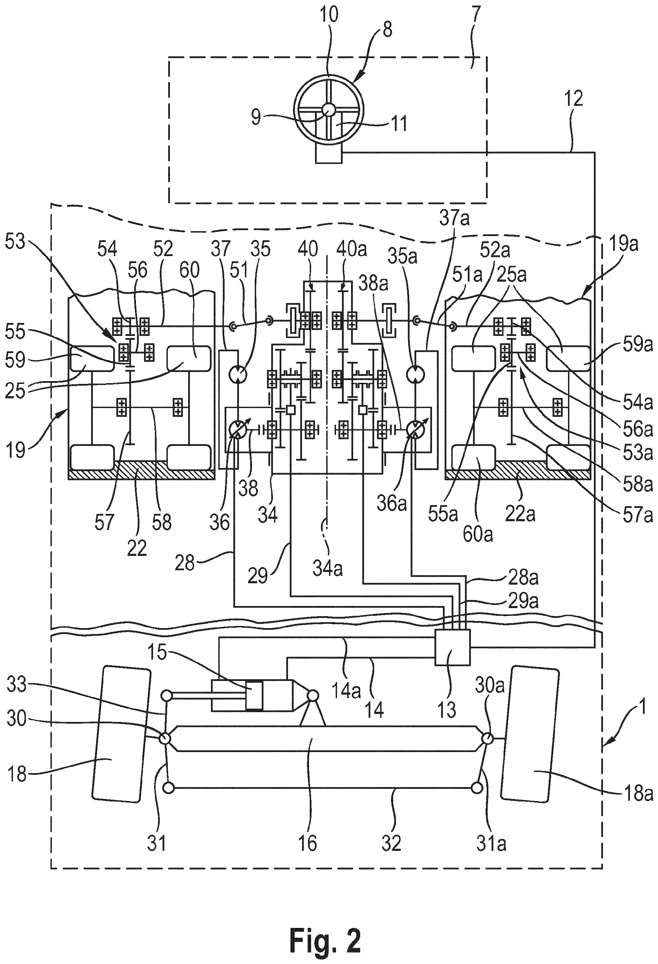

Wie weiterhin aus der Figur 1 hervorgeht, ist die selbstfahrende Erntemaschine 1 im Bereich oberhalb des Schrägförderers 5 mit einer Fahrerkabine 7 versehen, in der sich unter anderem eine Lenkeinrichtung 8 befindet, die aus einem auf einer Lenksäule 9 angeordnetem Lenkrad 10 sowie aus einem Lenkwinkelgeber 11 besteht. Anstelle dieses Lenkwinkelgebers 11 kann auch ein Geberzylinder Bestandteil der Lenkeinrichtung 8 sein. Von diesem Lenkwinkelgeber 11 geht eine erste Steuerleitung 12 zu einer Regeleinrichtung 13, die einen über die Lenkeinrichtung 8 eingegebenen Sollwert, also eine Lenkbewegung des Lenkrades 10, verarbeitet, und von der aus über eine zweite Steuerleitung 14 ein entsprechender Sollwert auf eine Lenkbetätigung 15 übertragen wird. Der entsprechende Istwert wird von der Lenkbetätigung 15 aus über eine Steuerleitung 14a an die Regeleinrichtung 13 übermittelt. Die Lenkbetätigung 15 ist, wie aus der Figur 1 hervorgeht, an einer Hinterachse 16 angeordnet, auf der sich ein Fahrgestell 17 der selbstfahrenden Erntemaschine 1 abstützt. An dieser Hinterachse 16 sind lenkbare Hinterräder angeordnet, von denen in der Seitenansicht der Figur 1 nur ein Hinterrad 18 sichtbar ist. Auf die entsprechende Anlenkung der beiden Hinterräder an der Hinterachse 16 wird nachfolgend noch im Zusammenhang mit der Figur 2 eingegangen werden.

Weiterhin weist die selbstfahrende Erntemaschine 1 ein Raupenlaufwerk 19 auf, das über ein weiteres Fahrgestellteil 20 im Wesentlichen das Gewicht der selbstfahrenden Erntemaschine 1 auf einem Boden 21 eines abzuerntenden Feldes abstützt. Das Raupenlaufwerk 19 weist ein endloses Laufband 22 auf, welches an seinem Außenumfang profiliert ist. Dieses Laufband 22 umschlingt dabei zwei Umlenkräder 23 und 24 sowie ein Antriebsrad 25. In einem zwischen den beiden Umlenkrädern 23 und 24 liegenden Bereich ist das Laufband 22, ausgehend vom Fahrgestellteil 20, mittels Stützrollen 26 und 27 am Boden 21 abgestützt. Wie weiterhin aus der Darstellung hervorgeht, wirkt die Regeleinrichtung 13 über Geberleitungen 28 und 29 auf einen Antrieb des Antriebsrades 25. Diese Antriebselemente sind in einer spiegelbildlichen Anordnung auch auf der anderen Seite der selbstfahrenden Erntemaschine 1, also auf der in Fahrtrichtung gesehen rechten Seite, vorgesehen.

Insbesondere die Anordnung der entsprechenden Raupenlaufwerke 19 und 19a sowie deren erfindungsgemäßer Antrieb sind dem in der nachfolgenden Figur 2 dargestellten ersten Ausführungsbeispiel zu entnehmen. Soweit die Bauelemente bereits im Zusammenhang mit der Figur 1 erläutert wurden, werden nachfolgend die gleichen Bezugszeichen verwendet. Zunächst sei auf die Lenkung der an der Hinterachse 16 vorgesehenen Hinterräder 18 und 18a eingegangen. Die Hinterräder 18 und 18a sind über Achsschenkel 30 und 30a schwenkbar an der Hinterachse 16 geführt, wobei die Achsschenkel 30 und 30a über Spurstangenhebel 31 und 31a und eine Spurstange 32 aneinander gekoppelt sind. Weiterhin geht von dem Achsschenkel 30 ein Lenkhebel 33 aus, der mit der als Nehmerzylinder ausgebildeten Lenkbetätigung 15 verbunden ist.

Wie bereits im Zusammenhang mit der Figur 1 erläutert, ist die Regeleinrichtung 13 über zwei als Druckmittelleitungen ausgeführte zweite Steuerleitungen 14 und 14a mit der Lenkbetätigung verbunden, wobei im vorliegenden Fall der Regeleinrichtung 13 ein hydraulisches Lenkventil zugeordnet sein kann. Über diese beiden Steuerleitungen 14 und 14a erfolgt wahlweise eine Druckbeaufschlagung einer der beiden Druckräume des Nehmerzylinders, also eine entsprechende Verstellung der Lenkbetätigung 15. Eine Veränderung des Lenkwinkels an der Hinterachse 16 wird dabei, wie allgemein üblich, über das in der Fahrerkabine 7 angeordnete Lenkrad 10 ausgelöst. Dieser veränderte Lenkwinkel wird von dem mit der Lenksäule 9 der Lenkeinrichtung 8 verbundenen Lenkwinkelgeber 11 über die erste Steuerleitung 12 auf die Regeleinrichtung 13 übertragen. Wie bereits erläutert, gehen von der Regeleinrichtung 13 Geberleitungen aus, die im Rahmen der beiden Antriebeinheiten mit 28, 28a und 29, 29a bezeichnet sind und zum Antrieb der beiden Raupenlaufwerke 19 und 19a führen. Dabei sind innerhalb eines Achs- beziehungsweise Getriebegehäuses 34 getrennte Antriebseinheiten für das in Fahrtrichtung gesehen linke Raupenlaufwerk 19 und das in Fahrtrichtung gesehen rechte Raupenlaufwerk 19a vorgesehen. Somit ergibt sich beidseitig einer Symmetrieachse 34a für beide Antriebseinheiten ein spiegelbildlicher Aufbau. Dieser sei nachfolgend anhand beider Antriebseinheiten erläutert.

Zwei von einer nicht näher dargestellten Brennkraftmaschine angetriebene Hydropumpen 35, 35a, die als Verstellpumpe ausgebildet sein können, versorgen zwei in ihrem Schluckvolumen veränderbare Hydromotoren 36, 36a mit Druckmittel und sind dabei in hydrostatischen Arbeitskreisen 37, 37a angeordnet. Sowohl die jeweilige Hydropumpe 35, 35a als auch der entsprechende Hydromotor 36, 36a können dabei als mit einer nicht näher dargestellten Schwenkscheibe versehene Einheit ausgebildet sein, das heißt als verstellbare Axialkolbenpumpe und als verstellbarer Axialkolbenmotor. Von jedem der Hydromotoren 36 und 36a geht eine Ausgangswelle 38 beziehungsweise 38a aus.

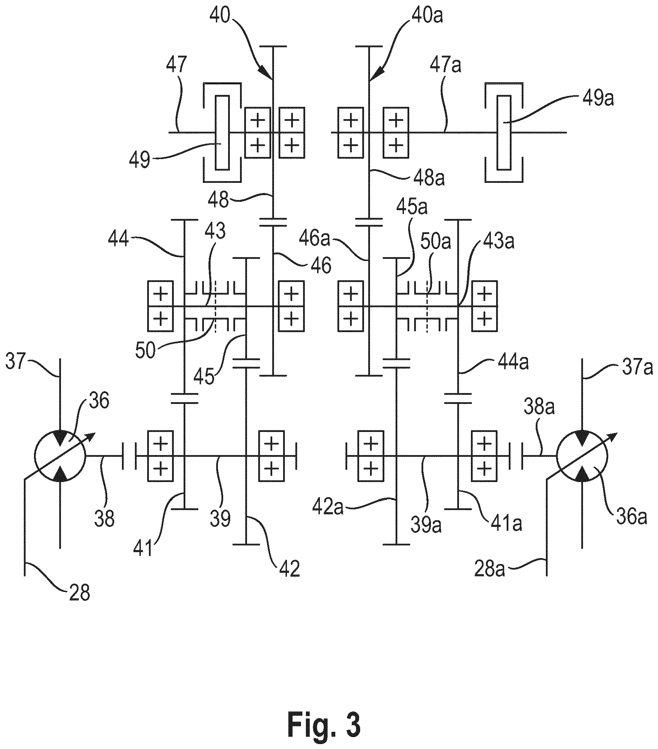

Der Aufbau zweier in einem gemeinsamen Achs- beziehungsweise Getriebegehäuse 34 angeordneter mechanischer Getriebe sei zunächst anhand der Figur 3 erläutert. Danach sind die Hydromotoren 36 und 36a jeweils drehfest an eine Hauptwelle 39, 39a eines mechanischen Getriebes 40, 40a gekuppelt. Auf dieser Hauptwelle 39, 39a sind Antriebsräder 41, 41a und 42, 42a drehfest angeordnet, die mit frei drehbar auf einer Vorgelegewelle 43, 43a angeordneten Vorgelegerädern 44, 44a und 45, 45a im Eingriff sind. Zwischen den beiden Vorgelegerädern 44 und 45 ist eine Schaltkupplung 50, 50a angeordnet, die jeweils eines der Vorgelegeräder 44, 44a oder 45, 45a mit der Vorgelegewelle 43, 43a kuppelt. Dadurch lässt sich das mechanische Getriebe 40 in zwei unterschiedliche Übersetzungsstufen schalten. Ein Abtrieb von der Vorgelegewelle 43, 43a erfolgt über ein auf dieser drehfest angeordnetes Zahnrad 46, 46a, das mit einem auf einer Abtriebswelle 47, 47a angeordneten Abtriebsrad 48, 48a kämmt. Die Abtriebswelle 47, 47a nimmt eine Bremsscheibe 49, 49a einer Bremseinrichtung auf.

Die Figur 2 zeigt, dass mit der Abtriebswelle 47, 47a eine Kardanwelle 51, 51a verbunden ist, die an ihrem anderen Ende an einer Antriebswelle 52, 52a angelenkt ist. Ferner ist erkennbar, dass das Raupenlaufwerk 19 einen als Untersetzungsgetriebe wirkenden Endantrieb 53, 53a aufweist, der aus der mit einem Zahnrad 54, 54a versehenen Antriebswelle 52, 52a, einer mit einem Zahnrad 55, 55a versehenen Zwischenwelle 56, 56a sowie einer ein Zahnrad 57, 57a aufnehmenden Ritzelwelle 58, 58a besteht. Dabei ist die Ritzelwelle 58, 58a an ihren Enden mit Ritzeln 59, 59a und 60, 60a verbunden, die formschlüssig an einem Innenumfang des endlosen Laufbands 22, 22a eingreifen und somit das im Zusammenhang mit der Figur 1 genannte Antriebsrad 25 beziehungsweise 25a bilden.

Dadurch wird gemeinsam mit dem an der Hinterachse 16 vorgenommenen Lenkeinschlag eine Verstellung der Schluckvolumina der beiden Hydromotoren 36 und 36a in der Weise vorgenommen, dass aufgrund der unterschiedlichen auf die Raupenlaufwerke 19 und 19a übertragenen Antriebsdrehmomente ein Moment um eine Hochachse der selbstfahrenden Erntemaschine 1 erzeugt wird, das zu einer Verringerung des Wendewiderstandsmoments führt. Durch die Verwendung zweier mechanischer Getriebe 40 und 40a, die jeweils den Raupenlaufwerken 19 und 19a zugeordnet sind, kann dabei eine notwendige hydraulische Spreizung reduziert werden.

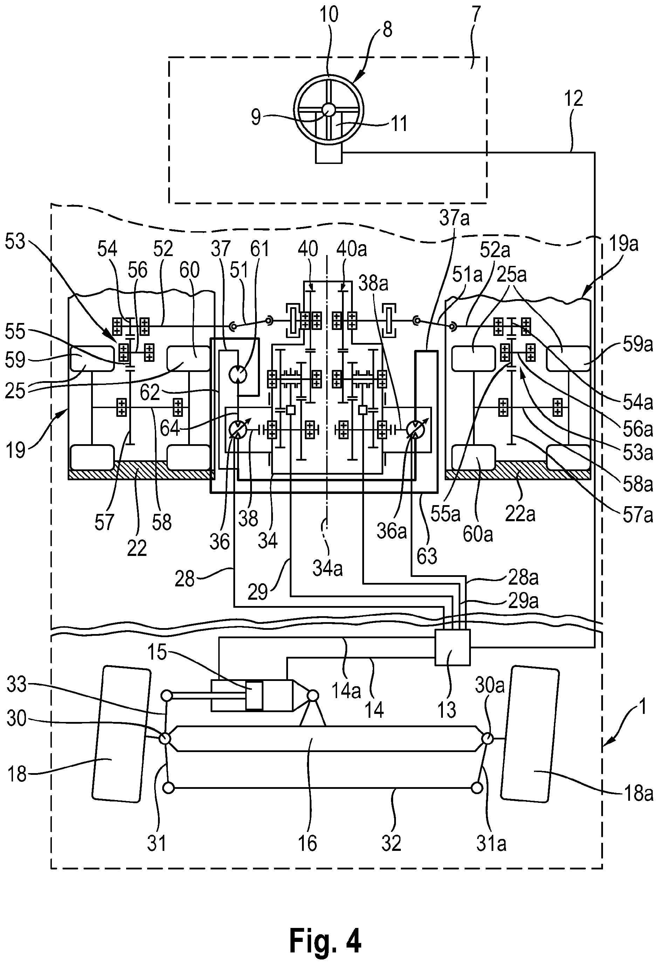

Die Darstellung in Fig. 4 zeigt ein zweites Ausführungsbeispiel des Lenk- und Antriebssystems Soweit die Bauelemente bereits im Zusammenhang mit der Figur 2 erläutert wurden, werden nachfolgend die gleichen Bezugszeichen verwendet. Das Lenk- und Antriebssystem gemäß dem zweiten Ausführungsbeispiel unterscheidet sich von dem in Fig. 2 dargestellten ersten Ausführungsbeispiel lediglich dadurch, dass genau eine Hydropumpe 61 vorgesehen ist, welche die beiden Hydromotoren 36, 36a mit Druckmittel versorgt. Die Hydropumpe 61 speist über eine Zuleitung 62 den Hydromotor 36 im hydrostatischen Arbeitskreis 37 sowie den Hydromotor 36a im hydrostatischen Arbeitskreis 37a. Durch eine Rückleitung 63 und 64 wird das Druckmittel wieder zu der Hydropumpe 61 zurückgeführt.

### Bezugszeichenliste

1 selbstfahrende Erntemaschine
2 Erntevorsatz
3 Mähbalken
4 Haspel
5 Schrägförderer
6 Schwenkachse
7 Fahrerkabine
8 Lenkeinrichtung
9 Lenksäule
10 Lenkrad
11 Lenkwinkelgeber
12 Erste Steuerleitung
13 Regeleinrichtung
14 Zweite Steuerleitung
14a zweite Steuerleitung
15 Lenkbetätigung
16 Hinterachse
17 Fahrgestellteil
18 Hinterrad
18a Hinterrad
19 Raupenlaufwerk
19a Raupenlaufwerk
20 Fahrgestellteil
21 Boden
22 Laufband
22a Laufband
23 Umlenkrad
24 Umlenkrad
25 Antriebsrad
25a Antriebsrad
26 Stützrolle
27 Stützrolle
28 Geberleitung
28a Geberleitung
29 Geberleitung
29a Geberleitung
30 Achsschenkel
31 Spurstangenhebel
32 Spurstange
33 Lenkhebel
34 Achs- bzw. Getriebegehäuse
34a Symmetrieachse
35 Hydropumpe
35a Hydropumpe
36 Hydromotor
36a Hydromotor
37 hydrostatischer Arbeitskreis
37a hydrostatischer Arbeitskreis
38 Ausgangswelle
38a Ausgangswelle
39 Hauptwelle
39a Hauptwelle
40 mechanisches Getriebe
40a mechanisches Getriebe
41 Antriebsrad
41a Antriebsrad
42 Antriebsrad
42a Antriebsrad
43 Vorgelegewelle
43a Vorgelegewelle
44 Vorgelegerad
44a Vorgelegerad
45 Vorgelegerad
45a Vorgelegerad
46 Zahnrad von 43
46a Zahnrad von 43a
47 Abtriebswelle
47a Abtriebswelle
48 Abtriebsrad
48a Abtriebsrad
49 Bremsscheibe
49a Bremsscheibe
50 Schaltkupplung
50a Schaltkupplung
51 Kardanwelle
51a Kardanwelle
52 Antriebswelle
52a Antriebswelle
53 Endantrieb
53a Endantrieb
54 Zahnrad von 52
54a Zahnrad von 52a
55 Zahnrad von 56
55a Zahnrad von 56a
56 Zwischenwelle
56a Zwischenwelle
57 Zahnrad von 58
57a Zahnrad von 58a
58 Ritzelwelle
58a Ritzelwelle
59 Ritzel
59a Ritzel
60 Ritzel
60a Ritzel
61 Hydropumpe
62 Zuleitung
63 Rückleitung
64 Rückleitung

## Patentansprüche

1. Selbstfahrende Erntemaschine (1) mit einem frontseitigen Erntevorsatz (2), welche Erntemaschine (1) zwei in deren Längsrichtung gegenüber dem Erntevorsatz (2) versetzt angeordnete Antriebswellen (52 und 52a) eines Fahrantriebes aufweist, wobei die Antriebswellen (52 und 52a) trieblich mit sich beidseitig der Erntemaschine (1) erstreckenden, in deren Längsrichtung verlaufenden Raupenlaufwerken (19 und 19a) verbunden sind, wobei in einem Heckbereich der Erntemaschine (1) eine Hinterachse (16) mit über eine Lenkeinrichtung (8) lenkbaren Hinterrädern (18, 18a) vorgesehen ist, und wobei eine von der Lenkeinrichtung (8) auf die lenkbaren Hinterräder (18, 18a) übertragene Lenkbewegung veränderbar ist, **dadurch gekennzeichnet, dass** jede Antriebswelle (52 und 52a) über jeweils einen separaten Hydromotor (36 und 36a) eines hydrostatischen Getriebes angetrieben wird, wobei ein Schluckvolumen eines jeden der beiden Hydromotoren (36 und 36a) derart in Abhängigkeit von der von der Lenkeinrichtung (8) auf die lenkbaren Hinterräder (18, 18a) übertragenen Lenkbewegung veränderbar ist, dass bei gleichzeitiger Lenkung der Hinterräder (18, 18a) ein zusätzliches Moment um eine Hochachse der Erntemaschine (1) erzielbar ist, und wobei jeder der Hydromotoren (36 und 36a) die jeweilige Antriebswelle (52 und 52a) über ein in zumindest zwei Übersetzungsstufen schaltbares mechanisches Getriebe (40 und 40a) antreibt.

2. Selbstfahrende Erntemaschine nach Patentanspruch 1, **dadurch gekennzeichnet, dass** jeder der Antriebswellen (52 und 52a) ein hydrostatisches Getriebe zugeordnet ist, dessen Arbeitskreis (37 und 37a) mit einer in ihrem Fördervolumen veränderlichen Hydropumpe (35 und 35a) in Verbindung steht.

3. Selbstfahrende Erntemaschine nach Patentanspruch 1, **dadurch gekennzeichnet, dass** jedes der mechanischen Getriebe (40 und 40a) in Vorgelegebauweise ausgebildet ist.

4. Selbstfahrende Erntemaschine nach Patentanspruch 3, **dadurch gekennzeichnet, dass** jedes der mechanischen Getriebe (40 und 40a) aus einer vom Hydromotor (36, 36a) angetrieben Hauptwelle (39, 39a) mit drehfest auf dieser angeordneten Antriebsrädern (41, 42, 41a, 42a) unterschiedlicher Zähnezahl besteht, die mit Vorgelegerädern (44, 45, 44a, 45a) im Eingriff sind, die frei drehbar auf einer Vorgelegewelle (43, 43a) und wahlweise mit dieser über eine Schaltkupplung (50, 50a) kuppelbar sind, und dass ein drehfest auf der Vorgelegewelle (43, 43a) angeordnetes Zahnrad (46, 46a) mit einem zumindest mittelbar mit der Antriebswelle (52, 52a) des Raupenlaufwerks (19, 19a) verbundenen Abtriebsrad (48, 48a) im Eingriff steht.

5. Selbstfahrende Erntemaschine nach Patentanspruch 1, **dadurch gekennzeichnet, dass** ein Antriebsrad (25, 25a) des Raupenlaufwerks (19, 19a) von der Antriebswelle (52, 52a) aus über einen als Untersetzungsgetriebe ausgebildeten Endantrieb (53, 53a) angetrieben wird.

6. Selbstfahrende Erntemaschine nach Patentanspruch 5, **dadurch gekennzeichnet, dass** der jeweilige Endantrieb (53, 53a) als Stirnradtrieb mit einem Zwischenrad (55, 55a) ausgebildet ist.

7. Selbstfahrende Erntemaschine nach Patentanspruch 5, **dadurch gekennzeichnet, dass** das der Endantrieb (53, 53a) als Planetengetriebe mit einer Standübersetzung ausgebildet ist.

8. Selbstfahrende Erntemaschine nach Patentanspruch 1, **dadurch gekennzeichnet, dass** auf jeder der Abtriebswellen (47, 47a) des mechanischen Getriebes (40, 40a) eine Bremseinrichtung (49, 49a) angeordnet ist.

9. Selbstfahrende Erntemaschine nach Patentanspruch 1, **dadurch gekennzeichnet, dass** die Hinterachse (16) ein hydraulisches Lenksystem aufweist, dass der Lenkeinrichtung (8) ein Messwertaufnehmer (11) zur Erfassung eines eingestellten Lenkwinkels der lenkbaren Hinterräder (18, 18a) zugeordnet ist und dass die entsprechenden Lenkwinkel als Istwerte einer Regeleinrichtung (13) zugeführt werden, die Sollgrößen an Steuereinheiten der Hydromotoren (36, 36a) liefert.

10. Selbstfahrende Erntemaschine nach Patentanspruch 9, **dadurch gekennzeichnet, dass** die Regeleinrichtung (13) die Sollgrößen an Schaltbetätigungen von Schaltkupplungen (50, 50a) liefert.

11. Selbstfahrende Erntemaschine nach Patentanspruch 10, **dadurch gekennzeichnet, dass** mit jeder der Schaltkupplungen (50, 50a) zumindest zwei Übersetzungsstufen zwischen dem jeweiligen Hydromotor (36, 36a) und der entsprechenden Antriebswelle (52, 52a) schaltbar sind.

## Claims

1. A self-propelled harvester (1) comprising a front-mounted harvesting attachment (2), which harvester has two drive shafts (52 and 52a) of a travel drive, that are arranged displaced with respect to the harvesting attachment (2) in the longitudinal direction of the harvester, wherein the drive shafts (52 and 52a) are drivingly connected to track-laying units (19 and 19a) which extend on both sides of the harvester (1) and in the longitudinal direction thereof, wherein provided in a rear region of the harvester (1) is a rear axle (16) having rear wheels (18, 18a) steerable by way of a steering device (8), and wherein a steering movement transmitted from the steering device (8) to the steerable rear wheels (18, 18a) is variable, **characterised in that** each drive shaft (52 and 52a) is driven by way of a respective separate hydraulic motor (36 and 36a) and a hydrostatic transmission, wherein a displacement volume of each one of the two hydraulic motors (36 and 36a) is variable in dependence on the steering movement transmitted from the steering device (8) to the steerable rear wheels (18, 18a) in such a way that with simultaneous steering of the rear wheels (18, 18a) an additional moment about a vertical axis of the harvester (1) can be achieved, and wherein each of the hydraulic motors (36 and 36a) drives the respective drive shaft (52 and 52a) by way of a mechanical transmission (40 and 40a) which can be shifted into at least two transmission ratio steps.

2. A self-propelled harvester according to claim 1 **characterised in that** associated with each of the drive shafts (52 and 52a) is a hydrostatic transmission whose working circuit (37 and 37a) is in communication with a hydraulic pump (35 and 35a) which is variable in its delivery volume.

3. A self-propelled harvester according to claim 1 **characterised in that** each of the mechanical transmissions (40 and 40a) is of a layshaft structure.

4. A self-propelled harvester according to claim 3 **characterised in that** each of the mechanical transmissions (40 and 40a) comprises a main shaft (39, 39a) which is driven by the hydraulic motor (36, 36a) and which has drive gears (41, 42, 41a, 42a) with different numbers of teeth, that are arranged non-rotatably on the main shaft and are in engagement with layshaft gears (44, 45, 44a, 45a) which are freely rotatable on a layshaft (43, 43a) and can be selectively coupled thereto by way of a shift clutch (50, 50a), and that a gear (46, 46a) arranged non-rotatably on the layshaft (43, 43a) is in engagement with a drive output gear (48, 48a) connected at least indirectly to the drive shaft (52, 52a) of the track-laying unit (19, 19a).

5. A self-propelled harvester according to claim 1 **characterised in that** a drive gear (25, 25a) of the track-laying unit (19, 19a) is driven from the drive shaft (52, 52a) by way of a final drive (53, 53a) in the form of a reduction transmission.

6. A self-propelled harvester according to claim 5 **characterised in that** the respective final drive (53, 53a) is in the form of a spur gear drive having an intermediate gear (55, 55a).

7. A self-propelled harvester according to claim 5 **characterised in that** the final drive (53, 53a) is in the form of a planetary transmission with a constant transmission ratio.

8. A self-propelled harvester according to claim 1 **characterised in that** a brake device (49, 49a) is arranged on each of the drive output shafts (47, 47a) of the mechanical transmission (40, 40a).

9. A self-propelled harvester according to claim 1 **characterised in that** the rear axle (16) has a hydraulic steering system, that a measurement value sensor (11) for detecting a set steering angle of the steerable rear wheels (18, 18a) is associated with the steering device (8) and that the corresponding steering angles are fed as actual values to a regulating device (13) which supplies target values to control units of the hydraulic motors (36, 36a).

10. A self-propelled harvester according to claim 9 **characterised in that** the regulating device (13) delivers the target values to shift actuating means of shift clutches (50, 50a).

11. A self-propelled harvester according to claim 10 **characterised in that** at least two transmission ratio steps can be shifted between the respective hydraulic motor (36, 36a) and the corresponding drive shaft (52, 52a) with each of the shift clutches (50, 50a).

## Revendications

1. Machine de récolte automotrice (1) comprenant un outil frontal de récolte (2), laquelle machine de récolte (1) comporte deux arbres d'entraînement (52 et 52a) d'un groupe propulseur disposés avec un décalage du point de vue de leur direction longitudinale par rapport à l'outil frontal de récolte (2), les arbres d'entraînement (52 et 52a) étant reliés de manière motrice à des trains de roulement à chenilles (19 et 19a) qui s'étendent de part et d'autre de la machine de récolte (1) et qui s'étendent dans la direction longitudinale de celle-ci, dans une zone arrière de la machine de récolte (1) étant prévu un essieu arrière (16) avec des roues arrière (18, 18a) dirigeables par l'intermédiaire d'un équipement directionnel (8), et un mouvement directionnel transmis par l'équipement directionnel (8) aux roues arrière dirigeables (18, 18a) étant modifiable, **caractérisée en ce que** chaque arbre d'entraînement (52 et 52a) est entraîné par l'intermédiaire d'un moteur hydraulique séparé (36 et 36a) d'une boîte de vitesses hydrostatique, un volume d'absorption de chacun des deux moteurs hydrauliques (36 et 36a) étant modifiable en fonction du mouvement directionnel transmis par l'équipement directionnel (8) aux roues arrière dirigeables (18, 18a), de façon à pouvoir obtenir un moment supplémentaire autour d'un axe vertical de la machine de récolte (1) en cas de braquage simultané des roues arrière (18, 18a), et chacun des moteurs hydrauliques (36 et 36a) entraînant l'arbre d'entraînement correspondant (52 et 52a) par l'intermédiaire d'une transmission mécanique (40 et 40a) commutable dans au moins deux rapports de multiplication.

2. Machine de récolte automotrice selon la revendication 1, **caractérisée en ce qu'**à chacun des arbres d'entraînement (52 et 52a) est associée une boîte de vitesses hydrostatique dont le circuit de travail (37 et 37a) est relié à une pompe hydraulique (35 et 35a) à volume de refoulement variable (35 et 35a).

3. Machine de récolte automotrice selon la revendication 1, **caractérisée en ce que** chacune des transmissions mécaniques (40 et 40a) est conçue avec des arbres de renvoi.

4. Machine de récolte automotrice selon la revendication 3, **caractérisée en ce que** chacune des transmissions mécaniques (40 et 40a) est constituée d'un arbre principal (39, 39a) entraîné par le moteur hydraulique (36, 36a) et muni de roues d'entraînement (41, 42, 41a, 42a) montées sur celui-ci et pourvues de nombres de dents différents, lesquelles sont en prise avec des pignons d'arbres intermédiaires (44, 45, 44a, 45a) qui sont en libre rotation sur un arbre intermédiaire (43, 43a) et sont accouplables au choix avec celui-ci par l'intermédiaire d'un accouplement temporaire (50, 50a), et **en ce qu'**une roue dentée (46, 46a) solidarisée en rotation sur l'arbre intermédiaire (43, 43a) est en prise avec une roue menée (48, 48a) reliée au moins indirectement à l'arbre d'entraînement (52, 52a) du train de roulement à chenilles (19, 19a).

5. Machine de récolte automotrice selon la revendication 1, **caractérisée en ce qu'**une roue d'entraînement (25, 25a) du train de roulement à chenilles (19, 19a) est entraînée à partir de l'arbre d'entraînement (52, 52a) par l'intermédiaire d'un moyen entraînement final (53, 53a) conformé en réducteur.

6. Machine de récolte automotrice selon la revendication 5, **caractérisée en ce que** chaque moyen entraînement final (53, 53a) est conformé en entraînement à pignon droit avec une roue intermédiaire (55, 55a).

7. Machine de récolte automotrice selon la revendication 5, **caractérisée en ce que** le moyen entraînement final (53, 53a) est conformé en engrenage planétaire à rapport fixe

8. Machine de récolte automotrice selon la revendication 1, **caractérisée en ce que** sur chacun des arbres de sortie (47, 47a) de la transmission mécanique (40, 40a) est disposé un équipement de freinage (49, 49a).

9. Machine de récolte automotrice selon la revendication 1, **caractérisée en ce que** l'essieu arrière (16) comporte un système directionnel hydraulique, **en ce qu'**à l'équipement directionnel (8) est associé un transducteur (11) pour mesurer un angle de braquage adopté par les roues arrière dirigeables (18, 18a), et **en ce que** les angles de braquage correspondants sont transmis en tant que valeurs réelles à l'équipement de régulation (13) qui fournit les grandeurs de consigne à des unités de commande des moteurs hydrauliques (36, 36a).

10. Machine de récolte automotrice selon la revendication 9, **caractérisée en ce que** l'équipement de régulation (13) fournit les grandeurs de consigne à des moyens d'actionnement d'accouplements temporaires (50, 50a) .

11. Machine de récolte automotrice selon la revendication 10, **caractérisée en ce que** chacun des accouplements temporaires (50, 50a) permet de commuter au moins deux rapports de multiplication entre chaque moteur hydraulique (36, 36a) et l'arbre d'entraînement correspondant (52, 52a).
